# FASCICULE DE BREVET EUROPEEN

(11) **EP 0 877 138 B1**
(45) Date de publication et mention de la délivrance du brevet: **03.12.2003**
(21) Numéro de dépôt: 98401001.7
(22) Date de dépôt: 24.04.1998
(51) Int. Cl.: E05D 13/00, E05D 15/10

(54) **Dispositif de guidage et d'arrêt d'une porte coulissante en particulier une porte latérale coulissante d'un véhicule automobile**
Stop- und Führungsvorrichtung für Schiebetür, insbesondere für Schiebetür eines Kraftfahrzeuges
Guiding and stopping means for sliding door, in particular for sliding door of a motor vehicle

(30) Priorité: 07.05.1997 FR 9705673
(43) Date de publication de la demande: 11.11.1998
(73) Titulaire: Renault s.a.s., 92100 Boulogne Billancourt (FR)
(72) Inventeur: Michelin, Didier, 78950 Gambais (FR); Bon, Benoît, 78370 Plaisir (FR); Anbari, Bibal, 78180 Montigny le Bretonneux (FR)

(56) Documents cités:
- EP-A- 0 356 373
- EP-A- 0 495 498
- GB-A- 2 125 887
- GB-A- 2 135 724

## Description

L'invention concerne un dispositif de guidage et d'arrêt d'une porte coulissante, notamment mais non exclusivement une porte latérale coulissante d'un véhicule automobile.

On connaît un tel dispositif par le document EP 0 356 373 qui décrit un véhicule comportant une porte coulissante et un bas de porte avec un rail de guidage d'un galet porté par un chariot de porte. Un butoir est monté à une extrémité du rail. A proximité du butoir, un ressort à lame est monté dans le rail pour qu'en fin de course du chariot, le galet entre en contact avec le ressort pour freinage et arrêt.

On connaît aussi par le document EP 0 495 498 un dispositif comportant un amortisseur avec un creux en forme de V pour coopérer avec un galet de roulement de porte coulissante en fin de course du galet dans un rail. Le dispositif comporte aussi une lame de ressort prévue pour réduire, à proximité de l'amortisseur, la distance entre une piste de roulement du galet et une contre portée du rail située face à ladite piste de roulement.

Un but de l'invention est de réduire le bruit de fonctionnement de tels dispositifs tout en en augmentant la résistance et l'endurance, ce qui est particulièrement important dans le domaine automobile.

L'invention a également pour but de simplifier la construction mécanique de tels dispositifs tout en assurant, d'une part, un bon ralentissement de la porte en fin de course lorsque la vitesse de déplacement de la porte est élevée et, d'autre part, une ouverture et un blocage corrects de la porte lorsque la vitesse de déplacement de celle-ci est faible.

L'invention propose donc un dispositif de guidage et d'arrêt d'une porte coulissante, en particulier une porte latérale coulissante d'un véhicule automobile.

Selon une caractéristique générale de l'invention, ce dispositif comprend un chariot de porte équipé d'au moins un galet rotatif, et un châssis de guidage délimitant un chemin de guidage pour le galet du chariot. Le châssis de guidage comporte une rampe articulée à rotation apte à coopérer avec le galet, cette rampe s'appuyant sur un bloc d'un matériau viscoélastique de façon à occuper, en l'absence de contact entre la rampe et le galet, une position de repos dans laquelle la rampe obture partiellement le chemin de guidage, et une position de travail dans laquelle la rampe comprime le bloc viscoélastique sous l'action du galet se déplaçant sur la rampe dans le chemin de guidage. Il est également prévu une butée de fin de course disposée au voisinage de la rampe et définissant avec cette rampe en position de repos un logement d'arrêt pour le galet.

Il est particulièrement avantageux que la résistance à la compression du matériau viscoélastique augmente avec la vitesse de déplacement du galet dans le chemin de guidage. En d'autres termes, plus la vitesse de déplacement du galet sur la rampe est élevée, plus le matériau viscoélastique absorbe d'énergie. Ceci permet notamment de garantir un bon ralentissement de la porte lors d'une vitesse de déplacement élevée de celle-ci, et permet également d'éviter un phénomène de rebond du galet sur la rampe qui empêcherait alors l'immobilisation du galet du chariot de porte et conduirait par conséquent à une porte mal verrouillée en position ouverte, par exemple.

Le matériau viscoélastique est par exemple un élastomère, et de préférence un copolymère éthylène propylène modifié par des diènes (élastomère EPDM).

Selon un mode de réalisation de l'invention, le châssis de guidage comporte des rails de guidage ainsi qu'une pièce terminale, fixée à l'extrémité des rails de guidage, et supportant la rampe articulée, le bloc viscoélastique et la butée de fin de course. Ainsi, l'invention prévoit avantageusement une pièce terminale unique permettant de supporter à elle seule les pièces essentielles du dispositif de guidage et d'arrêt et de centraliser les fonctions de ralentissement, d'arrêt de porte et de butée de fin de course au niveau d'une même zone.

Selon un mode de réalisation de l'invention, la rampe comporte une première branche rectiligne articulée à rotation sur la pièce terminale et apte à coopérer à contact avec le galet. La rampe comporte également une deuxième branche prolongeant la première vers l'extérieur du chemin de guidage. Quant à la pièce terminale du châssis de guidage, elle comporte une paroi latérale sensiblement parallèle au chemin de guidage et possédant une ouverture, un décrochement rentrant et un élément de paroi disposé entre l'ouverture et l'axe d'articulation de la rampe. Plus précisément, le décrochement rentrant est disposé en vis-à-vis de l'ouverture et ménage avec celle-ci un logement pour la partie d'extrémité de la deuxième branche de la rampe. L'élément de paroi est quant à lui disposé en vis-à-vis de la première branche de la rampe. Un tel agencement permet de fixer le bloc viscoélastique à coincement entre la paroi latérale de la pièce d'extrémité et la rampe articulée.

Plus précisément, le bloc viscoélastique comporte avantageusement une première partie coincée entre ledit élément de paroi et la première branche de la rampe, et une deuxième partie coincée entre la partie d'extrémité de la deuxième branche de la rampe et le décrochement rentrant de la paroi latérale de la pièce d'extrémité.

Le logement d'arrêt du galet est ainsi de préférence limité par la butée de fin de course et la deuxième branche de la rampe en position de repos, le galet étant alors apte à reposer sur une partie du décrochement rentrant de la paroi latérale de la pièce d'extrémité.

D'autres avantages et caractéristiques de l'invention apparaîtront à l'examen de la description détaillée d'un mode de réalisation nullement limitatif, et des dessins annexés, sur lesquels :
la figure 1 est une vue schématique en perspective d'une pièce terminale d'un châssis de guidage d'un dispositif selon l'invention; et
la figure 2 est une vue de dessus schématique illustrant plus en détail les éléments contenus dans la pièce terminale de la figure 1.

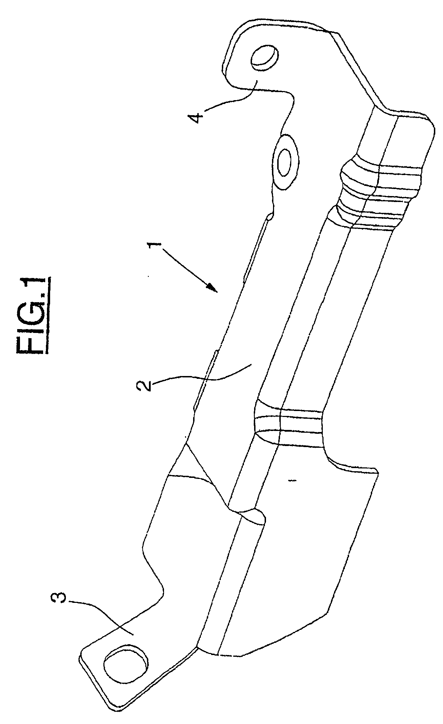

Sur la figure 1, la référence 1 désigne une pièce terminale d'un châssis de guidage d'un dispositif de guidage et d'arrêt selon l'invention. Cette pièce terminale comporte essentiellement une coque 2 destinée à être fixée sur le véhicule par des pattes 3 et 4.

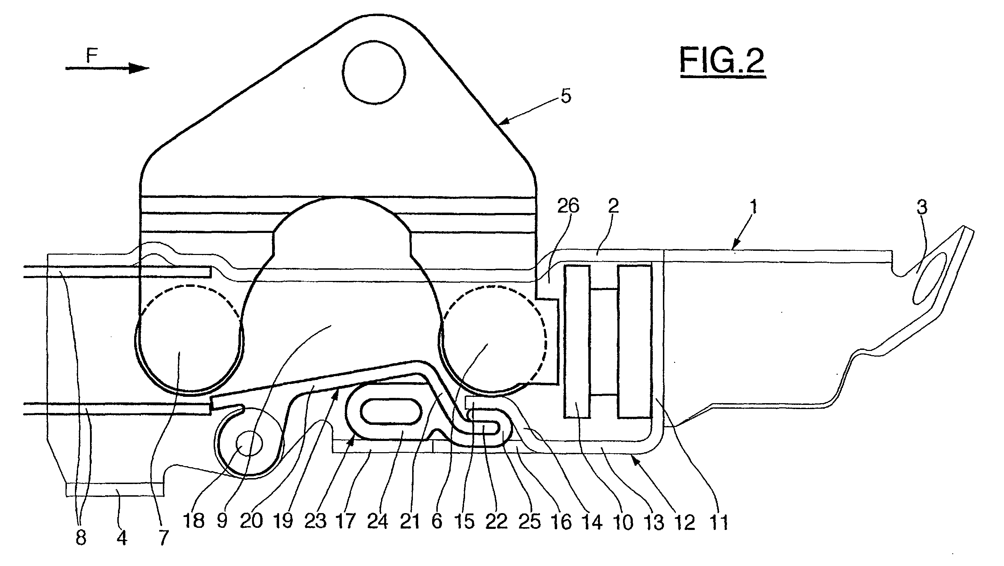

Comme illustrée plus en détail sur la figure 2, la coque 2 de la pièce terminale 1 est fixée, au niveau de son extrémité voisine de la patte 4, sur un système 8 de rails de guidage.

Les rails de guidage 8 ainsi que la coque 2 de la pièce terminale 1 définissent un chemin de guidage 9 pour un chariot 5 équipé ici de deux galets rotatifs 6 et 7 destinés à se déplacer dans le chemin de guidage. Le chariot 5 est fixé à la porte latérale coulissante du véhicule automobile, par exemple, porte non représentée ici à des fins de simplification.

Le chemin de guidage 9 aboutit à une butée de fin de course 10 fixée, par exemple par des clips, sur une paroi transversale 11 de la coque 2 de la pièce 1.

La paroi transversale 11 est raccordée à une paroi latérale 12 sensiblement parallèle à l'axe longitudinal du chemin de guidage 9. Cette paroi 12 comporte un premier élément de paroi 13 prolongé par un élément de paroi 14 incliné en direction du chemin de guidage, lui-même prolongé par un élément d'extrémité 15 sensiblement parallèle à l'axe longitudinal du chemin de guidage 9. Les deux éléments 14 et 15 forment ainsi un décrochement rentrant, c'est-à-dire un décrochement s'étendant en direction de l'intérieur de la coque 2, ou encore en direction de l'axe longitudinal du chemin de guidage.

La paroi latérale 12 comporte par ailleurs une ouverture 16, disposée sensiblement vis-à-vis du décrochement rentrant, et située entre le premier élément de paroi 13 et un second élément de paroi 17, également sensiblement parallèle à l'axe du chemin de guidage 9.

Ce deuxième élément de paroi 17 est disposé entre l'ouverture 16 et l'axe 18 d'articulation à rotation d'une rampe 19.

Cette rampe articulée 19 comporte une première branche 20, sensiblement rectiligne et faisant office de rampe proprement dite. L'extrémité de cette première branche 20, proche de l'axe de rotation 18, assure pour le galet une continuité de support avec l'extrémité de l'un des rails 8. L'autre extrémité de cette première branche 20 est prolongée, vers l'extérieur du chemin de guidage par une deuxième branche. Cette deuxième branche comporte une première partie 21 sensiblement rectiligne prolongée par une partie d'extrémité 22 sensiblement parallèle à l'ouverture 16 et à l'élément d'extrémité 15 du décrochement rentrant. Cette partie d'extrémité 22 vient se loger dans l'espace ménagé entre le décrochement rentrant et l'ouverture 16.

Entre la paroi latérale 12 et la rampe articulée 19, est fixé à coincement un bloc élastomère viscoélastique 23. Plus précisément, ce bloc 23 comporte une première partie 24 coincée entre le deuxième élément de paroi 17 et la première branche 19 de la rampe, et une deuxième partie 25 coincée entre la partie d'extrémité 22 de la deuxième branche de la rampe et le décrochement rentrant 14, 15 de la paroi latérale 12.

Lorsqu'aucun galet ne circule sur la première branche 20 de la rampe articulée 19, la rampe occupe, comme illustré sur la figure 2, une position de repos dans laquelle elle obture partiellement le chemin de guidage, c'est-à-dire que la première branche 20 fait avec l'axe longitudinal du chemin de guidage un angle non nul, par exemple ici un angle de 10° environ.

Sur la figure 2, la flèche F indique le sens d'ouverture de la porte latérale coulissante.

Par conséquent, lorsque la porte est fermée, les galets 6 et 7 du chariot 5 sont situés dans les rails de guidage 8 à gauche (sur la figure 2) de la rampe articulée 19. Lorsque l'on souhaite ouvrir la porte, on déplace cette dernière dans le sens indiqué par la flèche F, ce qui a pour conséquence de déplacer les galets du chariot, et en particulier le galet 6 dans le chemin de guidage en direction de la rampe articulée 19. Lors de ce mouvement, lorsque le galet 6 roule sur la première branche 20 de la rampe 19, celle-ci s'écarte vers l'extérieur du chemin de guidage et comprime le bloc élastomère 23. La deuxième partie 25 de ce bloc élastomère traverse alors au moins partiellement l'ouverture 16 de la coque 2. Ce mouvement de rotation de la rampe et la compression du bloc élastomère 23 provoquent par conséquent le ralentissement du chariot 5. Lorsque le galet 6, ralenti, franchit la rampe, il vient s'immobiliser, comme illustré sur la figure 2, dans un logement d'arrêt 26 ménagé entre la butée de fin de course 10 et la portion rectiligne 21 de la deuxième branche de la rampe, et repose sur l'élément d'extrémité 15 du décrochement rentrant de la paroi latérale 12. La porte est alors bloquée en position ouverte.

Le matériau viscoélastique avantageusement utilisé pour le bloc 23 est un élastomère, de préférence un élastomère EPDM, dont la résistance à la compression augmente avec la vitesse de déplacement du galet dans le chemin de guidage. On pourra par exemple utiliser l'élastomère EPDM 15635 de la Société française MGI (Les Mureaux, France). Ainsi, un tel élastomère permettra par exemple d'obtenir une dureté à la fermeture de 60 N et une dureté à l'ouverture de 45 N, pour une vitesse de translation de porte de 1,6 m/seconde. Par ailleurs, outre le fait qu'un tel matériau viscoélastique garantit un bon ralentissement de la porte à des vitesses élevées de déplacement, il évite le phénomène de rebond du galet sur la rampe lorsque la vitesse de déplacement de la porte est faible, et garantit par conséquent également à vitesse faible un blocage du galet 6 dans le logement d'arrêt 26.

Le matériau de la butée de fin de course 10, destiné à arrêter un galet déjà fortement ralenti, peut être par exemple un mélange caoutchouc butyle/EPDM 14524 de la Société MGI.

## Revendications

1. Dispositif de guidage et d'arrêt d'une porte coulissante, en particulier d'une porte latérale coulissante d'un véhicule automobile, comportant un chariot de porte (5) équipé d'au moins un galet rotatif (6, 7), un châssis de guidage délimitant un chemin de guidage (9) pour ledit galet (6, 7) du chariot et une butée de fin de course (10), **caractérisé par le fait qu'**il comprend une rampe articulée à rotation (19) apte à coopérer avec le galet (6) et s'appuyant sur un bloc (23) d'un matériau viscoélastique de façon à occuper, en l'absence de contact entre la rampe (19) et le galet (6), une position de repos dans laquelle la rampe (19) obture partiellement le chemin de guidage (9), et une position de travail dans laquelle la rampe (19) comprime le bloc viscoélastique (23) sous l'action du galet (6) se déplaçant sur la rampe (19) dans le chemin de guidage (9), la butée de fin de course (10) étant disposée au voisinage de la rampe (19) et définissant avec la rampe (19) en position de repos un logement d'arrêt (26) pour le galet (6).

2. Dispositif selon la revendication 1, **caractérisé par le fait que** la résistance à la compression du matériau viscoélastique augmente avec la vitesse de déplacement du galet (6) dans le chemin de guidage (9).

3. Dispositif selon la revendication 2, **caractérisé par le fait que** le matériau viscoélastique est un élastomère.

4. Dispositif selon la revendication 3, **caractérisé par le fait que** l'élastomère est un copolymère éthylène propylène modifié par des diènes.

5. Dispositif selon l'une des revendications précédentes, **caractérisé par le fait que** le chassis de guidage comporte des rails de guidage (8) ainsi qu'une pièce terminale (1), fixée à l'extrémité des rails de guidage (8), et supportant la rampe articulée (19), le bloc viscoélastique (23) et la butée de fin de course (10).

6. Dispositif selon la revendication 5, **caractérisé par le fait que** la rampe (19) comporte une première branche (20) rectiligne articulée à rotation sur la pièce terminale et apte à coopérer à contact avec le galet (6), et une deuxième branche (21, 22) prolongeant la première branche vers l'extérieur du chemin de guidage, **par le fait que** la pièce terminale comporte une paroi latérale (12) sensiblement parallèle au chemin de guidage et possédant une ouverture (16), un décrochement rentrant (14, 15) disposé en vis-à-vis de l'ouverture (16) et ménageant avec celle-ci un logement pour la portion d'extrémité (22) de la deuxième branche de la rampe, et un élement de paroi (17) disposé entre l'ouverture (16) et l'axe d'articulation (18) de la rampe et en vis-à-vis de la première branche (20) de la rampe, et **par le fait que** le bloc viscoélastique (23) est fixé à coincement entre la paroi latérale (12) de la pièce d'extrémité et la rampe articulée (19).

7. Dispositif selon la revendication 6, **caractérisé par le fait que** le bloc viscoélastique (23) comporte une première partie (24) coincée entre ledit élément de paroi (17) et la première branche (20) de la rampe, et une deuxième partie (25) coincée entre la portion d'extrémité (22) de la deuxième branche de la rampe et le décrochement rentrant (14, 15) de la paroi latérale de ladite pièce d'extrémité.

8. Dispositif selon la revendication 6 ou 7, **caractérisé par le fait que** le logement d'arrêt (26) du galet est limité par la butée de fin de course (10) et la deuxième branche (21, 22) de la rampe en position de repos, le galet étant apte à reposer sur une partie (15) dudit décrochement rentrant de la paroi latérale de la pièce d'extrémité.

## Patentansprüche

1. Führungs- und Haltevorrichtung für eine Schiebetür, insbesondere eine seitliche Schiebetür eines Kraftfahrzeuges, mit einem Laufwerk (5) für die Tür, das mit mindestens einer drehbaren Rolle (6, 7) versehen ist, einem Führungsgestell, das einen Führungsweg (9) für die Rolle (6, 7) des Laufwerks begrenzt und einem Endanschlag (10), **dadurch gekennzeichnet, dass** sie eine drehbar angelenkte Rampe (19) aufweist, die mit der Rolle (6) zusammenwirkt und sich auf einem Block (23) aus einem viskoselastischen Material derart abstützt, dass sie bei fehlender Berührung zwischen der Rampe (19) und der Rolle (6) eine Ruhestellung einnimmt, in der die Rampe (19) den Führungsweg (9) teilweise verschließt und eine Arbeitsstellung, in der die Rampe (19) den viskoselastischen Block (23) unter der Einwirkung der sich auf der Rampe (19) entlang des Führungsweges (9) bewegenden Rolle (6) komprimiert, wobei der Endanschlag (10) in der Nähe der Rampe (19) angeordnet ist und mit der Rampe (19) in der Ruhestellung eine Halteaufnahme (26) für die Rolle (6) bildet.

2. Vorrichtung nach Anspruch 1, **dadurch gekennzeichnet, dass** der Widerstand gegen eine Kompression des viskoselastischen Materials mit der Verschiebegeschwindigkeit der Rolle (6) im Führungsweg (3) zunimmt.

3. Vorrichtung nach Anspruch 2, **dadurch gekennzeichnet, dass** das viskoselastische Material ein Elastomer ist.

4. Vorrichtung nach Anspruch 3, **dadurch gekennzeichnet, dass** das Elastomer ein Äthylen- Propylen- Kopolymer ist, das durch Diene verstärkt ist.

5. Vorrichtung nach einem der vorhergehenden Ansprüche, **dadurch gekennzeichnet, dass** das Führungsgestell Führungsschienen (8) aufweist sowie ein Endteil (1), das am Ende der Führungsschienen (8) angeordnet ist und das die angelenkte Rampe (19), den viskoselastischen Block (23) und den Endanschlag (10) trägt.

6. Vorrichtung nach Anspruch 5, **dadurch gekennzeichnet, dass** die Rampe (19) einen ersten geradlinigen Arm (20) aufweist, der drehbar am Endteil angelenkt ist und der mit der Rolle (6) zusammenwirkt, sowie einen zweiten Arm (21, 22) aufweist, der den ersten Arm zum Äußeren des Führungsweges hin verlängert und dadurch, dass das Endteil eine Seitenwand (12) aufweist, die im Wesentlichen parallel ist zum Führungsweg und eine Öffnung (16) aufweist, wobei ein zurückgezogener Absatz (14, 15) gegenüber der Öffnung (16) angeordnet ist und mit dieser eine Aufnahme für den Endabschnitt (22) des zweiten Armes der Rampe bildet, wobei ein Wandteil (17) zwischen der Öffnung (16) und der Gelenkachse (18) der Rampe gegenüber dem ersten Arm (20) der Rampe angeordnet ist und dadurch, dass der viskoselastische Block (23) im Klemmsitz zwischen der Seitenwand (12) des Endteils und der angelenkten Rampe (19) eingesetzt ist.

7. Vorrichtung nach Anspruch 6, **dadurch gekennzeichnet, dass** der viskoselastische Block (23) einen ersten Abschnitt (24) aufweist, der zwischen dem Wandteil (17) und dem ersten Arm (20) der Rampe eingeklemmt ist und einen zweiten Abschnitt (25) aufweist, der zwischen dem Endabschnitt (22) des zweiten Armes der Rampe und dem zurückgezogenen Absatz (14, 15) der Seitenwand des Endteils eingeklemmt ist.

8. Vorrichtung nach Anspruch 6 oder 7, **dadurch gekennzeichnet, dass** die Halteaufnahme (26) der Rolle durch den Endanschlag (10) und den zweiten Arm (21, 22) der Rampe in der Ruhestellung begrenzt ist, wobei die Rolle an einem Abschnitt (15) des zurückgezogenen Absatzes der Seitenwand des Endteils anliegt.

## Claims

1. A guide and stop device for a sliding door, in particular a sliding side door of an automobile vehicle, comprising a door carriage (5) fitted with at least one rotary roller (6, 7), a guide chassis bounding a guideway (9) for the roller (6, 7) of the carriage and an end-of-stroke stop (10), **characterised in that** it comprises an articulated rotating ramp (19) adapted to cooperate with the roller (6) and bearing on a block (23) of visco-elastic material so as to occupy, when the ramp (19) and the roller (6) are not in contact, a rest position in which the ramp (19) partially closes the guideway (9) and an operating position in which the ramp (19) compresses the visco-elastic block (23) under the action of the roller (6) moving on the ramp (19) in the guideway (9), the end-of-stroke stop (10) being disposed in the vicinity of the ramp (19) and defining, with the ramp (19), a stop housing (26) for the roller (6) in the rest position.

2. A device as claimed in claim 1, **characterised in that** the compression resistance of the visco-elastic material increases with the speed of displacement of the roller (6) in the guideway (9).

3. A device as claimed in claim 2, **characterised in that** the visco-elastic material is an elastomer.

4. A device as claimed in claim 3, **characterised in that** the elastomer is a diene-modified ethylene propylene co-polymer.

5. A device as claimed in one of the preceding claims, **characterised in that** the guide chassis comprises guide rails (8) and an end piece (1) secured at the end of the guide rails (8) and supporting the articulated ramp (19), the visco-elastic block (23) and the end-of-stroke stop (10).

6. A device as claimed in claim 5, **characterised in that** the ramp (19) comprises a first rectilinear branch (20) articulated in rotation on the end piece and adapted to cooperate in contact with the roller (6), and a second branch (21, 22) prolonging the first branch towards the exterior of the guideway, **in that** the end piece comprises a lateral wall (12) substantially parallel to the guideway and comprising an opening (16), a recessed niche (14, 15) disposed opposite the opening (16) and providing, with the latter, a housing for the end portion (22) of the second branch of the ramp, and a wall member (17) disposed between the opening (16) and the axis of articulation (18) of the ramp and opposite the first branch (20) of the ramp, and **in that** the visco-elastic block (23) is secured by wedging between the lateral wall (12) of the end piece and the articulated ramp (19).

7. A device as claimed in claim 6, **characterised in that** the visco-elastic block (23) comprises a first portion (24) wedged between the wall member (17) and the first branch (20) of the ramp, and a second portion (25) wedged between the end portion (22) of the second branch of the ramp and the recessed niche (14, 15) of the lateral wall of the end piece.

8. A device as claimed in claim 6 or 7, **characterised in that** the stop housing (26) of the roller is limited by the end-of-stroke stop (10) and the second branch (21, 22) of the ramp in the rest position, the roller being adapted to rest on a portion (15) of the recessed niche of the lateral wall of the end piece.
